# EUROPÄISCHE PATENTSCHRIFT

(11) **EP 2 177 374 B1**
(45) Veröffentlichungstag und Bekanntmachung des Hinweises auf die Patenterteilung: **15.02.2012**
(21) Anmeldenummer: 09173093.7
(22) Anmeldetag: 15.10.2009
(51) Int. Cl.: B60C 1/00, C08L 19/00, C08L 51/04, C08F 287/00, C08L 53/02, C08F 279/02, C08K 5/548, C08L 9/06, C08L 21/00, C08L 13/00, C08K 3/36

(54) **Kautschukmischungen mit funktionalisierten Dienkautschuken und Mikrogelen, ein Verfahren zur Herstellung und deren Verwendung**
Rubber mixtures with functionalised diene rubbers and micro gels, a method for producing and using the same
Mélanges de caoutchouc dotés de caoutchouc diénique et de microgels fonctionnalisés, leur procédé de fabrication et d'utilisation

(30) Priorität: 20.10.2008 DE 102008052116
(43) Veröffentlichungstag der Anmeldung: 21.04.2010
(73) Patentinhaber: LANXESS Deutschland GmbH, 51369 Leverkusen (DE)
(72) Erfinder: Steinhauser, Norbert, 40789, Monheim (DE); Obrecht, Werner, 47447, Moers (DE); Hardy, David, 41541, Dormagen (DE); Groß, Thomas, 42489, Wülfrath (DE)

(56) Entgegenhaltungen:
- EP-A1- 1 449 875
- EP-A1- 1 520 732
- EP-A1- 1 902 865
- WO-A1-2005/033185
- DE-A1-102007 020 451
- US-A1- 2006 254 734

## Beschreibung

Die Erfindung betrifft Kautschukmischungen mit funktionalisierten Dienkautschuken und Mikrogelen, ein Verfahren zur Herstellung und deren Verwendung für die Herstellung nassrutschfester und rollwiderstandsarmer Kfz-Reifenlaufflächen mit hohem Abriebwiderstand.

Bei Reifen wird als eine wichtige Eigenschaft eine gute Haftung auf trockener und nasser Oberfläche angestrebt. Dabei ist es sehr schwer, die Rutschfestigkeit eines Reifens zu verbessern, ohne gleichzeitig den Rollwiderstand und den Abrieb zu verschlechtern. Ein niedriger Rollwiderstand ist für einen niedrigen Kraftstoffverbrauch von Bedeutung, und eine hohe Abriebbeständigkeit ist der entscheidende Faktor für eine hohe Lebensdauer des Reifens.

Nassrutschfestigkeit und Rollwiderstand eines Reifens hängen zum großen Teil von den dynamisch-mechanischen Eigenschaften der Kautschuke ab, die zum Bau des Reifens verwendet werden. Zur Erniedrigung des Rollwiderstands werden für die Reifenlauffläche Kautschuke mit einer hohen Rückprallelastizität bei höheren Temperaturen (60°C bis 100°C) eingesetzt. Andererseits sind zur Verbesserung der Nassrutschfestigkeit Kautschuke mit einem hohen Dämpfungsfaktor bei niedrigen Temperaturen (0°C) bzw. niedriger Rückprallelastizität im Bereich 0°C bis 23°C von Vorteil. Um dieses komplexe Anforderungsprofil zu erfüllen, werden Mischungen aus verschiedenen Kautschuken in der Lauffläche eingesetzt. Für gewöhnlich werden Mischungen aus einem oder mehreren Kautschuken mit einer relativ hohen Glasübergangstemperatur, wie Styrol-Butadien-Kautschuk, und einem oder mehreren Kautschuken mit relativ niedriger Glasübergangstemperatur, wie Polybutadien mit einem hohen 1,4-cis-Gehalt bzw. einem Styrol-Butadien-Kautschuk mit niedrigem Styrol- und geringen Vinylgehalt oder einem in Lösung hergestellten Polybutadien mit niedrigem Vinylgehalt verwendet.

Doppelbindungshaltige anionisch polymerisierte Lösungskautschuke, wie Lösungs-Polybutadien und Lösungs-Styrol-Butadien-Kautschuke, besitzen gegenüber entsprechenden Emulsionskautschuken Vorteile bei der Herstellung rollwiderstandsarmer Reifenlaufflächen. Die Vorteile liegen u.a. in der Steuerbarkeit des Vinylgehalts und der damit verbundenen Glasübergangstemperatur und der Molekülverzweigung. Hieraus ergeben sich in der praktischen Anwendung besondere Vorteile in der Relation von Nassrutschfestigkeit und Rollwiderstand des Reifens. So beschreibt US-PS 5 227 425 die Herstellung von Reifenlaufflächen aus einem Lösungs-SBR und Kieselsäure (Silica). Zur weiteren Verbesserung der Eigenschaften sind zahlreiche Methoden zur Endgruppenmodifizierung entwickelt worden, wie z.B. in EP-A 334 042 beschrieben mit Dimethylaminopropylacrylamid oder wie in EP-A 447 066 beschrieben mit Silylethern. Durch das hohe Molekulargewicht der Kautschuke ist der Gewichtsanteil der Endgruppen jedoch gering, und diese können daher die Wechselwirkung zwischen Füllstoff und Kautschukmolekül nur wenig beeinflussen. Aus EP-A 1000971 sind höherfunktionalisierte carboxylgruppenhaltige Copolymere aus Vinylaromaten und Dienen bekannt mit einem Gehalt an 1 ,2-gebundenem Dien (Vinylgehalt) bis 60 %. Copolymere aus Dien und funktionalisierten vinylaromatischen Monomeren sind in US 2005/0 256 284 A1 beschrieben. Der Nachteil dieser Copolymere liegt in der aufwändigen Synthese der funktionalisierten vinylaromatischen Monomere und der starken Einschränkung bei der Auswahl der funktionellen Gruppen, da nur solche funktionellen Gruppen zum Einsatz kommen können, die bei der anionischen Polymerisation keine Reaktion mit dem Initiator eingehen. Insbesonders solche funktionellen Gruppen, die Wasserstoffatome aufweisen, die zur Ausbildung von Wasserstoffbrückenbindungen fähig sind und damit in der Kautschukmischung besonders vorteilhafte Wechselwirkungen mit dem Füllstoff auszubilden vermögen, können nicht eingesetzt werden.

Zur Reduktion des Rollwiderstands von Reifen sind in der Literatur eine Vielzahl von Maßnahmen beschrieben worden u.a. auch die Verwendung von Polychloroprengelen (EP-A 405 216) und Polybutadiengelen (DE-A 42 20 563) in Reifenlaufflächen aus C=C-Doppelbindungen enthaltenden Kautschuken. Nachteile bei der Verwendung von Polychloropren-Gel ergeben sich aus dem hohen Kautschukpreis, der hohen Dichte des Polychloroprens und den beim Recyclingprozeß von Altreifen zu erwartenden ökologischen Nachteilen wegen der chlorhaltigen Komponente. Polybutadiengele gemäß DE-A 42 20 563 zeigen diese Nachteile nicht, jedoch wird hier die dynamische Dämpfung sowohl bei tiefen Temperaturen (-20 bis +20°C) als auch bei höheren Temperaturen (40-80°C) gesenkt, was in der Praxis neben Rollwiderstandsvorteilen zu Nachteilen im Nassrutschverhalten der Reifen führt. Schwefelvernetzte Kautschukgele gemäß GB-PS 1 078 400 zeigen keine verstärkende Wirkung und sind daher für die vorliegende Anwendung ungeeignet.

Es bestand daher die Aufgabe, Kautschukmischungen bereitzustellen, die die Nachteile des Standes der Technik nicht aufweisen.

Es wurde jetzt überraschend gefunden, dass die erfindungsgemäßen Kautschukmischungen, enthaltend (A) mindestens einen funktionalisierten Dienkautschuk mit einer Polymerkette aus Wiederholungseinheiten auf Basis mindestens eines Diens und optional einem oder mehreren vinylaromatischen Monomeren, und (B) mindestens ein Styrol/Butadien-Kautschukgel mit einem Quellungsindex in Toluol von 1 bis 25 und einer Teilchengröße von 5 bis 1000 nm sowie (C) gegebenenfalls weitere Kautschuke, Füllstoffe und Kautschukhilfsmittel, eine hohe dynamische Dämpfung bei niedriger Temperatur und eine geringe dynamische Dämpfung bei höherer Temperatur besitzen, so dass sich sowohl Vorteile im Rollwiderstand als auch im Nassrutschverhalten sowie in Bezug auf den Abrieb ergeben.

Gegenstand der Erfindung sind daher Kautschukmischungen, enthaltend (A) mindestens einen funktionalisierten Dienkautschuk mit einer Polymerkette aus Wiederholungseinheiten auf Basis mindestens eines Diens und optional einem oder mehreren vinylaromatischen Monomeren und (B) mindestens ein Styrol/Butadien-Kautschukgel mit einem Quellungsindex in Toluol von 1 bis 25 und einer Teilchengröße von 5 bis 1000 nm sowie (C) gegebenenfalls weitere Kautschuke, Füllstoffe und Kautschukhilfsmittel.

In dem funktionalisierten Dienkautschuk (A) sind Diene vorzugsweise 1,3-Butadien, Isopren, 1,3-Pentadien, 2,3-Dimethylbutadien, 1-Phenyl-1,3-Butadien und/oder 1,3-Hexadien. Besonders bevorzugt werden 1,3-Butadien und/oder Isopren eingesetzt.

Vinylaromatische Monomere im Sinne der Erfindung sind vorzugsweise Styrol, o-, m- und/oder p-Methylstyrol, p-tert.-Butylstyrol, α-Methylstyrol, Vinylnaphthalin, Divinylbenzol, Trivinylbenzol und/oder Divinylnaphthalin. Besonders bevorzugt wird Styrol eingesetzt.

In einer bevorzugten Ausführungsform der Erfindung weisen die funktionalisierten Dienkautschuke (A) einen Gehalt an einpolymerisierten vinylaromatischen Monomeren von 0 bis 60 Gewichts-%, vorzugsweise 15 bis 45 Gewichts-%, und einen Gehalt an Dienen von 40 bis 100 Gewichts-%, vorzugsweise 55 bis 85 Gewichts-% auf, wobei der Gehalt an 1,2-gebundenen Dienen (Vinylgehalt) in den Dienen 0,5 bis 95 Gewichts-%, vorzugsweise 10 bis 85 Gewichts-% beträgt und sich die Summe aus einpolymerisierten vinylaromatischen Monomeren und Dienen zu 100 % addiert.

Die funktionalisierten Dienkautschuke (A) setzen sich besonders bevorzugt zusammen aus 40-100 Gew. % 1,3-Butadien und 0 - 60 Gew.% Styrol, wobei der Anteil an gebundenen funktionellen Gruppen und /oder deren Salzen 0,02 bis 5 Gew. %, bezogen auf 100 Gew.% Dienkautschuk beträgt.

Funktionelle Gruppen und/oder deren Salze im funktionalisierten Dienkautschuk sind beispielsweise Carboxyl-, Hydroxy-, Amin-, Carbonsäureester-, Carbonsäureamid- oder Sulfonsäuregruppen. Bevorzugt sind Carboxyl- oder Hydroxy-Gruppen. Als Salze sind bevorzugt Alkali-, Erdalkali-, Zink- und Ammoniumcarboxylate sowie Alkali-, Erdalkali-, Zink- und Ammoniumsulfonate.

In einer ganz besonders bevorzugten Ausführungsform der Erfindung ist (A) ein funktionalisierter Dienkautschuk aus Wiederholungseinheiten auf Basis von 1,3- Butadien und Styrol, der mit Hydroxy- und/oder Carboxylgruppen funktionalisiert ist.

Die funktionalisierten Dienkautschuke (A) werden dabei vorzugsweise durch Polymerisation von Dienen und gegebenenfalls vinylaromatischen Monomeren in Lösung und anschließender Einführung von funktionellen Gruppen hergestellt, wie z.B. in DE 102008023885.6 beschrieben.

Unter Styrol/Butadien-Kautschukgelen (B) werden Mikrogele verstanden, hergestellt durch Vernetzung von
- SBR -: Styrol/Butadien-Copolymerisaten mit Styrolgehalten von 0 bis 100 Gew.-%, vorzugsweise 10 bis 60 Gew.-%, und/oder
- XSBR -: Styrol/Butadien-Copolymerisaten und Pfropfpolymerisaten mit weiteren polaren ungesättigten Monomeren, wie Acrylsäure, Methacrylsäure, Acrylamid, Methacrylamid, N-Methoxymethylmethacrylsäureamid, N- Acetoxymethylmethacrylsäureamid, Acrylnitril, Dimethylacrylamid, Hydroxyethylacrylat, Hydroxypropylacrylat, Hydroxybutylacrylat, Hydroxy- ethylmethacrylat, Hydroxypropylmethacrylat, Hydroxybutylmethacrylat, Ethylenglycoldimethacrylat, Butandioldimethacrylat, Trimethylolpropan- trimethacrylat, Pentaerythrittetramethacrylat mit Styrolgehalten von 0 bis 99 Gew.-% und Gehalten an einpolymerisierten polaren Monomeren von 1 bis 25 Gew.-%.

Bei den Styrol/Butadien-Kautschukgelen (B) sind XSBR-Styrol/Butadien-Copolymerisate und Pfropfpolymerisate enthaltend Hydroxyethylmethacrylat, Hydroxypropylmethacrylat, Hydroxybutylmethacrylat, Ethylenglykoldimethacrylat, Trimethylolpropantrimethacrylat und/oder Pentaerythrittetramethacrylat als polare ungesättigte Monomere besonders bevorzugt. Der Begriff Copolymerisate umfasst auch die Polymerisate, die aus 2 oder mehr Monomeren bestehen.

Die Styrol/Butadien-Kautschukgele besitzen eine Teilchengröße von 5 bis 1000, bevorzugt 20-400 nm (DVN-Wert nach DIN 53 206) und Quellungsindizes (Qi) in Toluol von 1 bis 25, vorzugsweise 1 bis 20. Der Quellungsindex wird aus dem Gewicht des lösungsmittelhaltigen Gels (nach Zentrifugation mit 20.000 Upm) und dem Gewicht des trockenen Gels berechnet:
- Qi: Naßgewicht des Gels/Trockengewicht des Gels.

Zur Ermittlung des Quellungsindex lässt man z.B. 250 mg SBR-Gel in 25 ml Toluol 24 Stunden unter Schütteln quellen. Das Gel wird abzentrifugiert und gewogen und anschließend bei 70°C bis zur Gewichtskonstanz getrocknet und nochmals gewogen.

In einer bevorzugen Ausführungsform handelt es sich bei den Styrol/Butadien-Kautschukgelen (B) um XSBR-Styrol/Butadien-Copolymerisate mit einem Gehalt an Hydroxygruppen von 20 bis 50 mg KOH/g. Der Hydroxylgruppengehalt der Styrol/Butadien-Kautschukgele (B) wird dabei durch Umsetzung mit Acetanhydrid und Titration der hierbei frei werdenden Essigsäure mit KOH nach DIN 53240 als Hydroxyl-Zahl mit der Dimension mg KOH/g Polymer bestimmt.

Die Herstellung der Styrol/Butadien-Kautschuk-Ausgangsprodukte erfolgt bevorzugt durch Emulsionspolymerisation. Siehe hierzu z.B. I. Franta, Elastomers and Rubber Compounding Materials, Elesevier, Amsterdam 1989, Seite 88 bis 92.

Die Vernetzung der Kautschuk-Ausgangsprodukte zu Styrol/Butadien-Kautschukgelen (B) erfolgt im Latexzustand und kann einerseits während der Polymerisation durch Copolymerisation mit mehrfunktionellen Monomeren, Fortführung der Polymerisation bis zu hohen Umsätzen oder im Monomerzulaufverfahren durch Polymerisation bei hohen internen Umsätzen erfolgen oder im Anschluß an die Polymerisation durch Nachvernetzung oder auch durch die Kombination beider Prozesse durchgeführt werden. Auch die Herstellung durch Polymerisation in Anwesenheit von Reglern, wie z.B. Thiolen, ist möglich.

Bei Vernetzung des Styrol/Butadien-Kautschuks durch Copolymerisation mit vernetzend wirkenden multifunktionellen Verbindungen werden bevorzugt multifunktionelle Comonomere mit mindestens zwei, vorzugsweise 2 bis 4, copolymerisierbaren C=C-Doppelbindungen, wie Diisopropenylbenzol, Divinylbenzol, Divinylether, Divinylsulfon, Diallylphthalat, Triallylcyanurat, Triallylisocyanurat, 1,2-Polybutadien, N,N'-m-Phenylenmaleinimid und/oder Triallyltrimellitat eingesetzt. Darüber hinaus kommen in Betracht: die Acrylate und Methacrylate von mehrwertigen, vorzugsweise 2- bis 4-wertigen, C₂-C₁₀-Alkoholen, wie Ethylenglykol, Propandiol-1,2, Butandiol, Hexandiol, Polyethylenglykol mit 2 bis 20, vorzugsweise 2 bis 8 Oxyethyleneinheiten, Neopentylglykol, Bisphenol A, Glycerin, Trimethylolpropan, Pentaerythrit, Sorbit und ungesättigte Polyester aus aliphatischen Di- und Polyolen sowie Maleinsäure, Fumarsäure und/oder Itaconsäure. Die multifunktionellen Verbindungen werden vorzugsweise in Mengen von 0,5 bis 15 Gew.%, besonders bevorzugt 1 - 10 Gew. %, bezogen auf die gesamte Monomermischung, eingesetzt.

Die Vernetzung der Styrol/Butadien-Kautschuke zu SBR-Kautschukgelen kann auch in Latexform durch Nachvernetzung mit vernetzend wirkenden Chemikalien erfolgen. Geeignete vernetzend wirkende Chemikalien sind beispielsweise organische Peroxide, z.B. Dicumylperoxid, t-Butylcumylperoxid, Bis-(t-butylperoxyisopropyl)benzol, Di-t-butylperoxid, Dibenzoylperoxid, Bis-(2,4-dichlorbenzoyl)peroxid, t-Butylperbenzoat, sowie organische Azoverbindungen, wie Azobisisobutyronitril und Azobiscyclohexannitril, sowie Di- und Polymercaptoverbindungen, wie Dimercaptoethan, 1,6-Dimercaptohexan, 1,3,5-Trimercaptotriazin, und Mercapto-terminierte Polysulfidkautschuke, wie Mercapto-terminierte Umsetzungsprodukte von Bis-chlorethylformal mit Natriumpolysulfid. Die optimale Temperatur zur Durchführung der Nachvernetzung ist naturgemäß von der Reaktivität des Vernetzers abhängig. Diese kann bei Temperaturen von Raumtemperatur bis ca. 170°C gegebenenfalls unter erhöhtem Druck durchgeführt werden. Siehe hierzu Houben-Weyl, Methoden der organischen Chemie, 4. Auflage, Bd. 14/2, Seite 848. Besonders bevorzugte Vernetzungsmittel sind Peroxide. In diesem Zusammenghang wird beispielhaft auf EP-A 1 307 504 verwiesen.

Vor, während oder nach der Nachvernetzung in Latexform kann gegebenenfalls auch eine Teilchenvergrößerung durch Agglomeration durchgeführt werden.

Auch Styrol/Butadien-Kautschuke, die in organischen Lösungsmitteln hergestellt wurden, können als Ausgangsprodukte zur Herstellung der Styrol/Butadien-Kautschukgele dienen. In diesem Fall empfiehlt es sich, die Lösung des Kautschuks gegebenenfalls unter Zuhilfenahme eines Emulgators in Wasser zu emulgieren und die so erhaltene Emulsion vor oder nach der Entfernung des organischen Lösungsmittels mit geeigneten Vernetzern nachträglich zu vernetzen. Als Vernetzer eignen sich die zuvor genannten Vernetzer.

In einer bevorzugten Ausführungsform der Erfindung beträgt der Anteil des Styrol/Butadien-Kautschukgels (B), bezogen auf 100 Gewichtsteile der Gesamtmenge an Kautschuk 1 bis 100 Gew.-Teile, besonders bevorzugt 5 bis 75 Gew.-Teile. Der Begriff Gesamtmenge umfasst sowohl den funktionalisierten Dienkautschuk als auch die gegebenenfalls vorhandenen zuvor erwähnten Kautschuke.

Die erfindungsgemäßen Kautschukmischungen können neben den erwähnten funktionalisierten Dienkautschuken (A) und dem Styrol/Butadien-Kautschukgel (B) als Komponente (C) noch andere Kautschuke enthalten, wie Naturkautschuk oder auch andere Synthesekautschuke. Sofern vorhanden liegt deren Menge üblicherweise im Bereich von 0,5 bis 85, bevorzugt 10 bis 75 Gew.-%, bezogen auf die gesamte Kautschukmenge in der Kautschukmischung. Die Menge an zusätzlich zugegebenen Kautschuken richtet sich wieder nach dem jeweiligen Verwendungszweck der erfindungsgemäßen Kautschukmischungen.

Zusätzliche Kautschuke sind beispielsweise Naturkautschuk sowie Synthesekautschuk.

Expemplarisch sind hier literaturbekannte Synthesekautschuke aufgeführt. Sie umfassen u.a.
- BR -: Polybutadien
- ABR -: Butadien/Acrylsäure-C₁-C₄-Alkylester-Copolymere
- IR -: Polyisopren
- E-SBR -: Styrol-Butadien-Copolymerisate mit Styrolgehalten von 1-60, vorzugsweise 20-50 Gew. %, hergestellt durch Emulsionspolymerisation
- IIR -: Isobutylen-Isopren-Copolymerisate
- NBR -: Butadien-Acrylnitril-Copolymere mit Acrylnitrilgehalten von 5-60, vorzugsweise 10-40 Gew. %
- HNBR -: teilhydrierter oder vollständig hydrierter NBR-Kautschuk
- EPDM -: Ethylen-Propylen-Dien-Terpolymerisate
sowie Mischungen dieser Kautschuke. Für die Herstellung von Kfz-Reifen sind insbesondere Naturkautschuk, E-SBR sowie Lösungs-SBR mit einer Glastemperatur oberhalb von -50°C, Polybutadienkautschuk mit hohem cis-Gehalt (> 90 %), der mit Katalysatoren auf Basis Ni, Co, Ti oder Nd hergestellt wurde, sowie Polybutadienkautschuk mit einem Vinylgehalt von bis zu 80 % sowie deren Mischungen von Interesse.

Als Füllstoffe kommen für die erfindungsgemäßen Kautschukmischungen alle bekannten in der Kautschukindustrie verwendeten Füllstoffe in Betracht. Diese umfassen sowohl aktive als auch inaktive Füllstoffe.

Zu erwähnen sind beispielhaft:
- hochdisperse Kieselsäuren, hergestellt z.B. durch Fällung von Lösungen von Silikaten oder Flammenhydrolyse von Siliciumhalogeniden mit spezifischen Oberflächen von 5-1000, vorzugsweise 20-400 m²/g (BET-Oberfläche) und mit Primärteilchengrößen von 10-400 nm. Die Kieselsäuren können gegebenenfalls auch als Mischoxide mit anderen Metalloxiden, wie Al-, Mg-, Ca-, Ba-, Zn-, Zr-, Ti-Oxiden vorliegen;
- synthetische Silikate, wie Aluminiumsilikat, Erdalkalisilikat wie Magnesiumsilikat oder Calciumsilikat, mit BET-Oberflächen von 20-400 m²/g und Primärteilchendurchmessern von 10-400 nm;
- natürliche Silikate, wie Kaolin und andere natürlich vorkommende Kieselsäure;
- Glasfasern und Glasfaserprodukte (Matten, Stränge) oder Mikroglaskugeln;
- Metalloxide, wie Zinkoxid, Calciumoxid, Magnesiumoxid, Aluminiumoxid;
- Metallcarbonate, wie Magnesiumcarbonat, Calciumcarbonat, Zinkcarbonat;
- Metallhydroxide, wie z.B. Aluminiumhydroxid, Magnesiumhydroxid;
- Metallsulfate, wie Calciumsulfat, Bariumsulfat;
- Ruße: Die hierbei zu verwendenden Ruße sind nach dem Flammruß-, dem Channel-, Furnace-, Gasruß-, Thermal-, Acetylenruß- oder Lichtbogenverfahren hergestellte Ruße und besitzen BET-Oberflächen von 9 - 200 m²/g, z.B. SAF-, ISAF-LS-, ISAF-HM-, ISAF-LM-, ISAF-HS-, CF-, SCF-, HAF-LS-, HAF-, HAF-HS-, FF-HS-, SPF-, XCF-, FEF-LS-, FEF-, FEF-HS-, GPF-HS-, GPF-, APF-, SRF-LS-, SRF-LM-, SRF-HS-, SRF-HM- und MT-Ruße bzw. nach ASTM N 110-, N219-, N220-, N231-, N234-, N242-, N294-, N326-, N327-, N330-, N332-, N339-, N347-, N351-, N356-, N358-, N375-, N472-, N539-, N550-, N568-, N650-, N660-, N754-, N762-, N765-, N774-, N787- und N990-Ruße.
- Kautschukgele, insbesondere solche auf Basis Polybutadien und/oder Polychloropren mit Teilchengrößen von 5 bis 1000 nm.

Bevorzugt werden als Füllstoffe eingesetzt hochdisperse Kieselsäuren und/oder Ruße.

Die genannten Füllstoffe können alleine oder im Gemisch eingesetzt werden. In einer besonders bevorzugten Ausführungsform enthalten die Kautschukmischungen als Füllstoffe ein Gemisch aus hellen Füllstoffen, wie hochdispersen Kieselsäuren, und Rußen, wobei das Mischungsverhältnis von hellen Füllstoffen zu Rußen bei 0,01 :1 bis 50:1 bevorzugt 0,05:1 bis 20:1 liegt.

Die Füllstoffe werden hierbei in Mengen im Bereich von 10 bis 500 Gew.-Teile bezogen auf 100 Gew.-Teile Kautschuk eingesetzt. Bevorzugt werden 20 bis 200 Gew.-Teile eingesetzt.

In einer weiteren Ausführungsform der Erfindung enthalten die Kautschukmischungen noch Kautschukhilfsmittel, die beispielsweise die Verarbeitungseigenschaften der Kautschukmischungen verbessern, der Vernetzung der Kautschukmischungen dienen, die physikalischen Eigenschaften der aus den erfindungsgemäßen Kautschukmischungen hergestellten Vulkanisate für deren speziellen Einsatzzweck verbessern, die Wechselwirkung zwischen Kautschuk und Füllstoff verbessern oder zur Anbindung des Kautschuks an den Füllstoff dienen.

Kautschukhilfsmittel sind z.B. Vernetzeragentien, wie z.B. Schwefel oder Schwefel-liefernde Verbindungen, sowie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Silane, Verzögerer, Metalloxide, Strecköle, wie z.B. DAE (Distillate Aromatic Extract)-, TDAE (Treated Distillate Aromatic Extract)-, MES (Mild Extraction Solvates)-, RAE (Residual Aromatic Extract)-, TRAE (Treated Residual Aromatic Extract)-, naphthenische und schwere naphthenische Öle sowie Aktivatoren.

Als Silane eignen sich z.B. die in EP A 1 318 172 beschriebenen Verbindungen. Bevorzugte Silane sind schwefelhaltige Organosiliciumverbindungen wie Bis(tri-alkoxy-silyl-propyl-polysulfane) der folgenden Strukturformel: 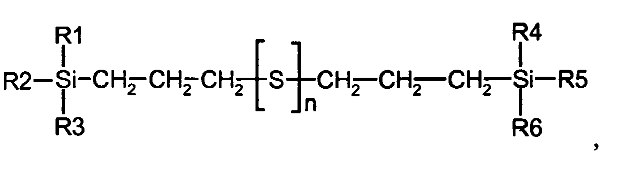 mit n = 2 bis 6, vorzugsweise im Zahlenmittel 2 oder 4 und

R1-R6 als identische oder verschiedene Alkoxyreste mit 1-12 C-Atomen, bevorzugt Methoxy und/oder Ethoxy. Solche Produkte sind kommerziell unter dem Namen Silan Si 75 (n = 2) und als Silan Si 69 (n = 4) der Fa. Evonik verfügbar.

Die schwefelhaltigen siliciumorganischen Verbindungen werden zweckmäßig in Gesamtmengen von 0,2 phr bis 12 phr, bezogen auf 100 Gewichts-Teile Gesamtkautschuke eingesetzt.

Die gesamte Menge an Kautschukhilfsmitteln liegt im Bereich von 1 bis 300 Gewichtsteilen, bezogen auf 100 Gewichtsteile an Gesamtkautschuk. Bevorzugt werden 5 bis 150 Gewichtsteile an Kautschukhilfsmitteln eingesetzt.

Ein weiterer Gegenstand der Erfindung ist ein Verfahren zur Herstellung der erfindungs-gemäßen Kautschukmischungen, wonach mindestens ein funktionalisierter Dienkautschuk mit mindestens einem Styrol/Butadien-Kautschukgel und gegebenenfalls weiteren Kautschuken, Füllstoffen und Kautschukhilfsmitteln in den vorgenannten Mengen in einer Mischapparatur bei Temperaturen von 20 - 220°C vermischt werden.

Die Mischungsherstellung kann in einem einstufigen oder in einem mehrstufigen Verfahren erfolgen, wobei 2 bis 3 Mischstufen bevorzugt sind. Die Zugabe von Schwefel und Beschleuniger erfolgt bevorzugt in der letzten Mischstufe, z. B. auf einer Walze, wobei Temperaturen im Bereich 30 bis 90°C bevorzugt sind.

Für die Mischungsherstellung geeignete Aggregate sind beispielsweise Walzen, Kneter, Innenmischer oder Mischextruder.

Ein weiterer Gegenstand der Erfindung ist zudem die Verwendung der erfindungsgemäßen Kautschukmischungen zur Herstellung von Kautschukvulkanisaten, vor allem für die Herstellung von Reifen, insbesondere Reifenlaufflächen.

Die erfindungsgemäßen Kautschukmischungen eignen sich auch zur Herstellung von Formkörpern, z.B. für die Herstellung von Kabelmänteln, Schläuchen, Treibriemen, Förderbändern, Walzenbelägen, Schuhsohlen, Dichtungsringen und Dämpfungselementen.

Die nachfolgenden Beispiele dienen der Erläuterung der Erfindung, ohne dabei limitierend zu wirken.

### Beispiele

### Herstellung eines Styrol/Butadien-Kautschukgels

Für die Compoundstudie wurde ein Styrol/Butadien-Kautschukgel mit einer Tg = -15°C eingesetzt. Dieses Gel hat in Toluol einen unlöslichen Anteil von 95 Gew.%. Der Quellungsindex in Toluol beträgt 7,4. Die Hydroxylzahl beträgt 32,8 mg KOH/g Gel.

Die Herstellung des Gels erfolgte durch 12-stündige Copolymerisation bei 5°C der nachfolgenden Monomermischung in Gegenwart von 300 Teilen (bezogen auf die angegebenen Monomerteile) Wasser, 4,5 Teilen Harzsäure, 0,1 Teilen para- Menthanhydroperoxid als Initiator, 0,07 Teilen Natriumethylendiamin-tetraacetat, 0,05 Teilen Eisensulfat-Heptahydrat und 0,15 Teilen Natriumformaldehydsulfoxylat.

| **Monomere** | **Mengenanteile [Gew.-Teile]** |
|---|---|
| Butadien | 44,5 |
| Styrol | 46,5 |
| Trimethylolpropantrimethacrylat | 1,5 |
| Hydroxyethylmethacrylat | 7,5 |

Im Anschluss wurde die Mischung erwärmt, die Restmonomere durch Wasserdampfdestillation bei reduziertem Druck und einer Temperatur von 70°C entfernt. Dann wurden 2 Teile (bezogen auf 100 Teile Produkt) des Antioxidanz 2,6-Di-tert.-butyl-4-methylphenol, bezogen auf 100 Teile Produkt, zugesetzt.

Danach wurde der Latex zu einer wässrigen Lösung von Natriumchlorid/Schwefelsäure gegeben, um die Koagulation herbeizuführen. Die Kautschukkrümel wurden abgetrennt, mit Wasser gewaschen und bei 50°C unter reduziertem Druck getrocknet.

Für die Kautschukmischung wurde als funktionalisierter Dienkautschuk ein Styrol-Butadienkautschuk (SBR) mit folgender Zusammensetzung eingesetzt:
Vinylgehalt: 46 Gewichts%, bezogen auf ölfreien Kautschuk,
Styrolgehalt: 24,5 Gewichts%, bezogen auf ölfreien Kautschuk,
Mooneyviskosität: 52 ME, bestimmt als ML1+4 (100°C) nach DIN 53 523,
Ölgehalt (TDAE-Ö1): 29,1 Gewichts%, bezogen auf ölverstreckten Kautschuk,

COOH-Funktionalität: 35 meq./kg.

Zum Vergleich wurde der nicht funktionalisierte Styrol-Butadienkautschuk BUNA VSL 5025-2, ein Produkt der Lanxess Deutschland GmbH (Lanxess), mit folgender Zusammensetzung eingesetzt:
Vinylgehalt: 46 Gewichts%, bezogen auf ölfreien Kautschuk,
Styrolgehalt: 24 Gewichts%, bezogen auf ölfreien Kautschuk,
Mooneyviskosität: 50 ME, bestimmt als ML1+4 (100°C) nach DIN 53 523,
Ölgehalt (TDAE-Ö1): 27,5 Gewichts%, bezogen auf ölverstreckten Kautschuk.

Die Zusammensetzungen der Kautschukmischungen sind in der nachstehenden Tabelle 1 zusammengefasst:

**Tabelle 1:**

| Einsatzstoffe in phr | Bsp.1 Vergleich | Bsp. 2 Vergleich | Bsp.3 Vergleich | Bsp. 4 Erf.-gemäß |
|---|---|---|---|---|
| BUNA VSL 5025-2 (nicht funktionalisiert, Vergleich) | 96,3 | 96,3 | 0 | 0 |
| SBR (funktionalisiert) | 0 | 0 | 97,6 | 97,6 |
| hoch-cis Polybutadien (BUNA® CB 24, Lanxess) | 30 | 30 | 30 | 30 |
| Styrol-Butadien-Kautschukgel | 0 | 15 | 0 | 15 |
| Kieselsäure (ULTRASIL® 7000 GR, Evonik) | 90 | 90 | 90 | 90 |
| Ruß (VULCAN® J/N375), Cabot | 7 | 7 | 7 | 7 |
| TDAE Öl (VIVATEC® 500, Hansen und Rosenthal) | 10 | 10 | 8,7 | 8,7 |
| Zinkseife (AKTIPLAST® GT) RheinChemie Rheinau GmbH) | 3,5 | 3,5 | 3,5 | 3,5 |
| Stearinsäure (EDENOR® C 18 98-100), Cognis Deutschland GmbH | 1 | 1 | 1 | 1 |
| Antioxidanz (VULKANOX® 4020/LG, Lanxess) | 2 | 2 | 2 | 2 |
| Antioxidanz (VULKANOX ® HS/LG, Lanxess) | 2 | 2 | 2 | 2 |
| Zinkoxid (ZINKWEISS ROTSIEGEL®), Grillo Zinkoxid GmbH | 2 | 2 | 2 | 2 |
| Lichtschutzwachs (ANTILUX ®654, RheinChemie Rheinau GmbH) | 2 | 2 | 2 | 2 |
| Silan® (SI 69, Evonik) | 7,2 | 7,2 | 7,2 | 7,2 |
| Sulfonamid (VULKALENT® E/C), Lanxess | 0,2 | 0,2 | 0,2 | 0,2 |
| Schwefel (MAHLSCHWEFEL 90/95 CHANCEL®), Solvay Barium Strontium | 1,6 | 1,6 | 1,6 | 1,6 |
| N-tert. Butyl-2-benzothiazolsulfenamid (VULKACIT® NZ/EGC, Lanxess) | 1,6 | 1,6 | 1,6 | 1,6 |
| Diphenylguanidin (VULKACIT ® D/C, Lanxess) | 2,2 | 2,2 | 2,2 | 2,2 |

Die oben genannten Mischungen (ohne Schwefel, N-tert.-Butyl-2-benzothiazolsulfenamid, Diphenylguanidin sowie Sulfonamid) wurden in einer ersten Mischstufe im 1,5-L Kneter bei 150°C gemischt. Danach wurde die Mischung ausgeworfen und 24 Stunden auf Raumtemperatur abgekühlt und in einem 2. Mischschritt nochmals im 1,5 L Kneter auf 150°C erwärmt. Dann wurde abgekühlt und die Mischungsbestandteile Schwefel und N-tert.-Butyl-2-benzothiazolsulfenamid, Diphenylguanidin sowie Sulfonamid anschließend auf einer Walze bei 40-60°C zugemischt.

Die oben genannten Mischungen wurden 20 Minuten bei 160°C in der Presse vulkanisiert. Die Eigenschaften der entsprechenden Vulkanisate sind in Tabelle 2 aufgeführt

**Tabelle 2:**

| Messgröße | Bsp. 1 Vergleich | Bsp. 2 Vergleich | Bsp. 3 Vergleich | Bsp. 4 Erf.--gemäß |
|---|---|---|---|---|
| Abrieb [mm³] (DIN 53516) | 100 | 97 | 94 | 86 |
| Rückprallelastizät bei 23°C [%] | 32,5 | 28,5 | 34 | 31 |
| Rückprallelastizät bei 60°C [%] | 55 | 59,5 | 62 | 62 |
| tan δ bei 0°C (dynamische Dämpfung bei 10 Hz) | 0,350 | 0,430 | 0,452 | 0,486 |
| tan δ bei 60°C (dynamische Dämpfung bei 10 Hz) | 0,112 | 0,097 | 0,100 | 0,094 |
| tan δ-Maximum (MTS-Amplitudensweep bei 1 Hz, 60°C) | 0,183 | 0,162 | 0,154 | 0,144 |

Für Reifenanwendungen wird ein niedriger Rollwiderstand benötigt, der dann gegeben ist, wenn im Vulkanisat ein hoher Wert für die Rückprallelastizität bei 60°C sowie ein niedriger tanδ-Wert in der dynamischen Dämpfung bei hoher Temperatur (60°C) und ein niedriges tan δ-Maximum im Amplitudensweep gemessen werden. Wie aus Tabelle 2 ersichtlich, zeichnet sich das Vulkanisat des erfindungsgemäßen Beispiels 4 durch eine hohe Rückprallelastizität bei 60°C, einen niedrigen tanδ-Wert in der dynamischen Dämpfung bei 60°C sowie ein niedriges tan δ-Maximum im Amplitudensweep aus.

Für Reifenanwendungen wird zudem eine hohe Nassrutschfestigkeit benötigt, die dann gegeben ist, wenn das Vulkanisat einen hohen tanδ-Wert in der dynamischen Dämpfung bei tiefer Temperatur (0°C) aufweist. Wie aus Tabelle 2 ersichtlich, zeichnet sich das Vulkanisat des erfmdungsgemäßen Beispiels 4 durch einen hohen tanδ-Wert in der dynamischen Dämpfung bei 0°C aus.

Des Weiteren ist für Reifenanwendungen eine hohe Abriebfestigkeit notwendig. Wie aus Tabelle 2 ersichtlich, zeichnet sich das Vulkanisat des erfindungsgemäßen Beispiels 4 durch einen geringen DIN-Abrieb aus.

## Patentansprüche

1. Kautschukmischungen, enthaltend (A) mindestens einen funktionalisierten Dienkautschuk mit einer Polymerkette aus Wiederholungseinheiten auf Basis mindestens eines Diens und optional einem oder mehreren vinylaromatischen Monomeren und (B) mindestens ein Styrol/Butadien-kautschukgel mit einem Quellungsindex in Toluol von 1 bis 25 und einer Teilchengröße von 5 bis 1000 nm sowie (C) gegebenenfalls weitere Kautschuke, Füllstoffe und Kautschukhilfsmittel.

2. Kautschukmischungen nach Anspruch 1, **dadurch gekennzeichnet, dass** der funktionalisierte Dienkautschuk aus Wiederholungseinheiten auf Basis von 1,3- Butadien und Styrol besteht und mit Hydroxy- und/oder Carboxylgruppen funktionalisiert ist.

3. Kautschukmischungen nach Anspruch 1, **dadurch gekennzeichnet, dass** sich diese zusammensetzt aus 40-100 Gewichts-% 1,3-Butadien und 0-60 Gewichts-% Styrol und der Anteil an gebundenen funktionellen Gruppen und/oder deren Salzen 0,02 bis 5 Gewichts-%, bezogen auf 100 Gewichts-% Dienkautschuk beträgt.

4. Kautschukmischungen nach einem oder mehreren der Ansprüche 1 bis 3, **dadurch gekennzeichnet, dass** der Anteil des Styrol/Butadien-Kautschukgels, bezogen auf 100 Gewichtsteile der Gesamtmenge an Kautschuk, 1 bis 100 Gewichtsteile beträgt.

5. Kautschukmischungen nach einem oder mehreren der Ansprüche 1 bis 3, **dadurch gekennzeichnet, dass** der Anteil des Styrol/Buradien-Kautschukgels, bezogen auf 100 Gewichtsteile der Gesamtmenge an Kautschuk, 5 bis 75 Gewichtsteile beträgt.

6. Kautschukmischungen nach einem oder mehreren der Ansprüche 1 bis 5, **dadurch gekennzeichnet, dass** das Styrol/Butadien-Kautschukgel ein XSBR-Styrol/Butadien-Copolymerisat und Pfropfpolymerisat ist" enthaltend Hydroxyethylmethacrylat, Hydroxypropylmethacrylat, Hydroxybutylmethacrylat, Ethylenglykoldimethacrylat, Trimethylolpropantrimethacrylat und/oder Pentacrythrittetramethacrylat.

7. Verfahren zur Herstellung der Kautschukmischungen nach einem oder mehreren der Ansprüche 1 bis 6, **dadurch gekennzeichnet, dass** mindestens ein funktionalisierter Dienkautschuk mit mindestens einem Styrol/Butadien-Kautschukgel und gegebenenfalls weiteren Kautschuken, Füllstoffen und Kautschukhilfsmittel in einer Mischapparatur bei Temperaturen von 20 - 220°C vermischt werden.

8. Verwendung der Kautschukmischungen nach einem oder mehreren der Ansprüche 1 bis 6 zur Herstellung von Kautschukvulkanisaten.

9. Verwendung der Kautschukmischungen nach einem oder mehreren der Ansprüche 1 bis 6 zur Herstellung von Reifen.

## Claims

1. Rubber mixtures, comprising (A) at least one functionalized diene rubber having a polymer chain composed of repeat units based on at least one diene and optionally composed of one or more vinylaromatic monomers, and (B) at least one styrene/butadiene rubber gel with a swelling index in toluene of from 1 to 25 and with a particle size of from 5 to 1000 nm and also (C) if appropriate further rubbers, fillers and rubber auxiliaries.

2. Rubber mixtures according to Claim 1, **characterized in that** the functionalized diene rubber is composed of repeat units based on 1,3-butadiene and styrene and has been functionalized using hydroxy and/or carboxy groups.

3. Rubber mixtures according to Claim 1, **characterized in that** these are composed of from 40 to 100% by weight of 1,3-butadiene and from 0 to 60% by weight of styrene, and the proportion of bonded functional groups and/or salts of these is from 0.02 to 5% by weight, based on 100% by weight of diene rubber.

4. Rubber mixtures according to one or more of Claims 1 to 3, **characterized in that** the proportion of the styrene/butadiene rubber gel, based on 100 parts by weight of the total amount of rubber, is from 1 to 100 parts by weight.

5. Rubber mixtures according to one or more of Claims 1 to 3, **characterized in that** the proportion of the styrene/butadiene rubber gel, based on 100 parts by weight of the total amount of rubber, is from 5 to 75 parts by weight.

6. Rubber mixtures according to one or more of Claims 1 to 5, **characterized in that** the styrene/butadiene rubber gel is an XSBR-styrene/butadiene copolymer or graft polymer, comprising hydroxyethyl methacrylate, hydroxylpropyl methacrylate, hydroxybutyl methacrylate, ethylene glycol dimethacrylate, trimethylolpropane trimethacrylate and/or pentaerythritol tetramethacrylate.

7. Process for the production of the rubber mixtures according to one or more of Claims 1 to 6, **characterized in that** at least one functionalized diene rubber is mixed with at least one styrene/butadiene rubber gel and, if appropriate, with further rubbers, fillers and rubber auxiliaries in a mixing apparatus at temperatures of from 20 to 220°C.

8. Use of the rubber mixtures according to one or more of Claims 1 to 6 for the production of rubber vulcanizates.

9. Use of the rubber mixtures according to one or more of Claims 1 to 6 for the production of tyres.

## Revendications

1. Mélanges de caoutchoucs, contenant (A) au moins un caoutchouc diénique fonctionnalisé comprenant une chaîne polymère constituée d'unités de répétition à base d'au moins un diène et éventuellement d'un ou de plusieurs monomères vinylaromatiques et (B) au moins un gel de caoutchouc de styrène/butadiène ayant un indice de gonflement dans le toluène de 1 à 25 et une taille de particule de 5 à 1 000 nm, ainsi que (C) éventuellement des caoutchoucs supplémentaires, des charges et des adjuvants de caoutchoucs.

2. Mélanges de caoutchoucs selon la revendication 1, **caractérisés en ce que** le caoutchouc diénique fonctionnalisé est constitué d'unités de répétition à base de 1,3-butadiène et de styrène et est fonctionnalisé avec des groupes hydroxy et/ou carboxyle.

3. Mélanges de caoutchoucs selon la revendication 1, **caractérisés en ce que** ceux-ci se composent de 40 à 100 % en poids de 1,3-butadiène et 0 à 60 % en poids de styrène, et la proportion de groupes fonctionnels reliés et/ou leurs sels est de 0,02 à 5 % en poids, par rapport à 100 % en poids de caoutchouc diénique.

4. Mélanges de caoutchoucs selon une ou plusieurs des revendications 1 à 3, **caractérisés en ce que** la proportion du gel de caoutchouc de styrène/butadiène, par rapport à 100 parties en poids de la quantité totale de caoutchouc, est de 1 à 100 parties en poids.

5. Mélanges de caoutchoucs selon une ou plusieurs des revendications 1 à 3, **caractérisés en ce que** la proportion du gel de caoutchouc de styrène/butadiène, par rapport à 100 parties en poids de la quantité totale de caoutchouc, est de 5 à 75 parties en poids.

6. Mélanges de caoutchoucs selon une ou plusieurs des revendications 1 à 5, **caractérisés en ce que** le gel de caoutchouc de styrène/butadiène est un XSBR - copolymère styrène/butadiène et polymère greffé, contenant du méthacrylate d'hydroxyéthyle, du méthacrylate d'hydroxypropyle, du méthacrylate d'hydroxybutyle, du diméthacrylate d'éthylène glycol, du triméthacrylate de triméthylolpropane et/ou du tétraméthacrylate de pentaérythrite.

7. Procédé de fabrication des mélanges de caoutchoucs selon une ou plusieurs des revendications 1 à 6, **caractérisé en ce qu'**au moins un caoutchouc diénique fonctionnalisé est mélangé avec au moins un gel de caoutchouc de styrène/butadiène et éventuellement des caoutchoucs supplémentaires, des charges et des adjuvants de caoutchouc dans un appareil de mélange à des températures de 20 à 220 °C.

8. Utilisation des mélanges de caoutchoucs selon une ou plusieurs des revendications 1 à 6 pour la fabrication de vulcanisats de caoutchoucs.

9. Utilisation des mélanges de caoutchoucs selon une ou plusieurs des revendications 1 à 6 pour la fabrication de pneus.
